Europäisches Patentamt

European Patent Office

Office européen des brevets

(11) Publication number: **0 379 849**
A2

## (12) EUROPEAN PATENT APPLICATION

(21) Application number: 89850118.4

(22) Date of filing: 12.04.89

(51) Int. Cl.5: **B05B 15/04, E04G 21/04, B05B 1/28**

(30) Priority: 25.01.89 FI 884990

(43) Date of publication of application:
01.08.90 Bulletin 90/31

(84) Designated Contracting States:
AT BE DE FR NL SE

(71) Applicant: OY LOHJA AB
PL 76
SF-03101 Nummela(FI)

(72) Inventor: Juvonen, Heino
Pelkosentie 7
FI-37800 Toijala(FI)

(74) Representative: Roth, Ernst Adolf Michael et al
GÖTEBORGS PATENTBYRA AB Box 5005
S-402 21 Göteborg(SE)

(54) Shotcrete gun.

(57) Shotcrete gun comprising a nozzle (1) through which fresh concrete is sprayed onto a given surface. The gun has a ring-shaped part (3) placed in front of the nozzle (1) in such manner that its outer surface is adjusted to the plane of the concrete surface (4) to be produced.

Fig.1

# SHOTCRETE GUN

The present invention relates to a shotcrete gun comprising a nozzle through which fresh concrete is sprayed onto a given surface.

Shotcreting devices used so far have no provision for the recovery of the splash concrete, involving considerable losses (over 10%). The concrete accumulated from the splashes and from the sizing of the concreted object are collected on a conveyor below the element. The drawbacks with such an arrangement are that it requires a large and expensive conveyor and is slow in recirculating the concrete. The quality of the secondary concrete deteriorates as the delay before re-use increases.

In prior art, when concrete structures with neat surfaces and exact dimensions were required, they were produced by spraying into moulds. In some structures the surfaces were left rough and inexact (e.g. tunnels). In prior-art procedures, concrete objects are shaved to the required dimensions using "knives" that leave the surface in such a rough condition that some form of finishing treatment is needed.

Thus, the drawbacks with earlier solutions are high losses of concrete and the difficulty of control of the thickness of the concrete structures. Smooth surfaces cannot be produced without moulds.

The object of the present invention is to eliminate the drawbacks mentioned. The shotcrete gun of the invention is characterized in that the gun has a ring-shaped part placed in front of the nozzle in such manner that its outer surface is adjusted to the plane of the concrete surface to be produced. In the shotcrete gun of the invention, the ring-shaped part, which follows the motion of the gun, shaves all superfluous concrete from the product surface. Using a ring-shaped part, no superfluous concrete is left on the surface of the concrete element, the result being a smooth surface of precise dimensions that requires no further treatment.

An embodiment of the invention is characterized in that it is provided with a splash guard extending outwards from the outer edge of the ring-shaped part. The splash guard serves to collect all extra concrete that is not passed through the opening in the ring-shaped part onto the surface of the product.

An embodiment of the invention is further characterized in that the splash guard is provided with a shaver placed inside the guard and serving to remove the concrete mass accumulated on the inside of the guard, enabling this concrete to be reused.

An embodiment of the invention is also characterized in that the ring-shaped part and splash guard rotate together. Thus the ring-shaped part laps the concrete surface, rendering it smooth. At the same time, the fixed shaver removes the concrete accumulated inside the splash guard.

An embodiment of the invention is also characterized in that the concrete accumulated in the splash guard can be conveyed, e.g. using a screw conveyor or a vacuum conveyor, back to the container for fresh concrete. Thus, the splash concrete can be immediately returned to the fresh concrete container and reused for shotcreting.

An embodiment of the invention is further characterized in that the shaver is most suitably placed in the upper part of the splash guard in such manner that the concrete mass removed by the shaver is directed into the jet of concrete flowing out of the nozzle.

In the following, the invention is described by the aid of an example with reference to the drawing attached, wherein:

Fig. 1 is a schematic representation of a shotcrete gun in longitudinal section.

Fig. 2 presents a section along the line II-II through the gun in Fig. 1.

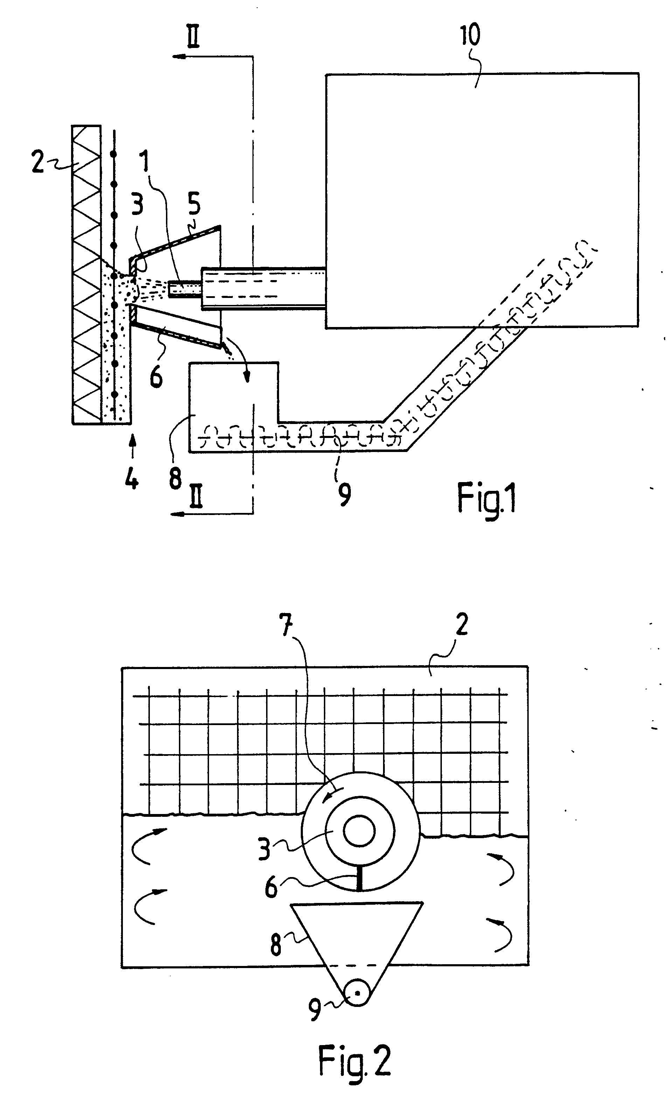

The shotcrete gun comprises a nozzle 1 through which fresh concrete is sprayed onto the element 2. In front of the nozzle 1 is a ring-shaped part 3 provided with an opening and placed so that its outer surface is adjusted to the plane of the concrete surface 4 to be produced. From the outer edge of the ring-shaped part 3, a conical splash guard 5 of a divergent form extends over the nozzle 1. Inside the splash guard is a shaver 6 which removes the concrete mass from the guard. The ring-shaped part 3 and the splash guard rotate together as shown by the arrow 7 in Fig. 2. Below the splash guard is a receptacle 8 for the concrete mass, with a screw conveyor 9 leading from the receptacle to the container 10 for fresh concrete.

The spraying orifice is the opening in the ring-shaped part 3, through which the concrete is sprayed onto the product 2. The size of the opening is determined by the properties of the gun and by the spraying distance. The spraying orifice may also be narrower than the jet of concrete. In this way, a concrete jet of exact contours is obtained for the spraying of details and edges. The position of the ring-shaped part determines the plane and structure of the product surface. The best results regarding smoothness of the concrete surface are achieved with a ring-shaped part that rotates or moves back and forth. The ring-shaped part may be e.g. a steel plate made of one piece or composed of several parts. The splash guard 5 is attached to the outer edge of the ring-shaped part 3. The splashes produced during shotcreting and the shavings cut off from the product during sizing remain inside the splash guard, from where they are recirculated. The splash guard may consist e.g. of a steel plate bent into the form of a cone. The shaver 6 keeps the back of the ring-shaped part 3 and the inside of the splash guard 5 clean. At the same time it directs the accumulated concrete into the receptacle 8. If the ring-shaped part and the splash guard rotate, then the shaver is fixedly mounted, and vice versa. The receptacle 8, placed under the splash guard 5, is of a width at least equal to that of the guard. The receptacle is so shaped that the concrete supplied into it will flow into the mouth of the conveyor 9. It is also possible to use the fresh concrete container itself as a receptacle 8 collecting the splashes. The motion and surface design of the ring-shaped part may be utilized to produce different concrete surface structures.

The shaver may also be placed in the upper part of the splash guard in such manner that the concrete mass removed by the shaver is directed into the jet flowing out of the nozzle 1. This variant is not shown in the drawing.

**Claims**

1. Shotcrete gun comprising a nozzle (1) through which fresh concrete is sprayed onto a given surface, **characterized** in that the gun has a ring-shaped part (3) placed in front of the nozzle (1) in such manner that its outer surface is adjusted to the plane of the concrete surface (4) to be produced.

2. Shotcrete gun according to claim 1, **characterized** in that it is provided with a splash guard (5) extending outwards from the outer edge of the ring-shaped part (3).

3. Shotcrete gun according to claim 1 or 2, **characterized** in that the splash guard (5) is provided with a shaver (6) to remove the concrete from the inside of the guard.

4. Shotcrete gun according to any one of the claims 1 - 3, **characterized** in that the ring-shaped part (3) rotates (7) together with the splash guard (5).

5. Shotcrete gun according to any one of the claims 1 - 4, **characterized** in that the concrete accumulated in the splash guard can be conveyed, e.g. using a screw conveyor or a vacuum conveyor, back to the container (10) for fresh concrete.

6. Shotcrete gun according to claim 3, **characterized** in that the shaver (6) is most suitably placed in the upper part of the splash guard (5) in such manner that the concrete mass removed by the shaver is directed into the jet flowing out of the nozzle (1).

Fig.1

Fig.2